# EUROPEAN PATENT APPLICATION

(11) **EP 4 485 612 A1**
(43) Date of publication of application: **01.01.2025**
(21) Application number: 22934290.2
(22) Date of filing: 31.03.2022
(51) Int. Cl.: H01M 10/42, H01M 10/0525

(54) **ELECTROCHEMICAL DEVICE AND ELECTRIC DEVICE**

(71) Applicant: Ningde Amperex Technology Limited, Ningde, Fujian 352100 (CN)
(72) Inventor: HUANG, Rui, Ningde, Fujian 352100 (CN)
(74) Representative: Klunker IP Patentanwälte PartG mbB
(86) International application number: PCT/CN2022/084688
(87) International publication number: WO 2023/184453

(57) **Abstract**

This application relates to the technical field of batteries, and discloses an electrochemical device, a battery module and an electric device. The electrochemical device includes an electrode assembly and an insulator. The electrode assembly includes a first electrode plate, a second electrode plate and a separator. The first electrode plate includes a first current collector and a first active material layer. The first active material layer is provided with a first connecting edge. A first blank foil region is provided on a first surface of the first electrode plate. The insulator covers a part of the first active material layer and a part of the first blank foil region, respectively. Through the above configuration, the insulator reduces the area of the first active material layer covered by a base portion while completely and reliably covering a part of the first connecting edge, which effectively increases the effective area of the first active material layer in the first electrode plate, thereby increasing the energy density of the electrochemical device.

## Description

### TECHNICAL FIELD

This application relates to the technical field of batteries, and in particular, to an electrochemical apparatus and an electric device.

### BACKGROUND

An electrochemical device is a device that converts energy from the outside into electrical energy and stores it inside in order to supply power to external device (e.g., portable electronic device) at moments of need. Generally, the electrochemical device includes a housing, an electrode assembly accommodated in the housing, an electrolyte, and a tab connected to the electrode assembly. The electrode assembly includes a first electrode plate and a second electrode plate that are spaced apart and have opposite polarities, as well as a separator disposed between the first electrode plate and the second electrode plate.

At present, in order to ensure that the electrochemical device has a relatively high energy density, manufacturers generally provide an active material layer on an inner surface of an outermost current collector, and provide no active material layer on an outer surface to form a blank foil region, so as to avoid the waste of cost and reduction of energy density due to non-participation of an active material on the outer surface in a reaction. For ease of illustration, the electrode plate with an end on the outermost circle of the electrode assembly is hereinafter defined as the first electrode plate and the other electrode plate as the second electrode plate.

For safety reasons, it is usually necessary to provide an insulating adhesive film between the active material layer and the blank foil region to prevent a short circuit between the first electrode plate and the second electrode plate due to contact, which affects the safety of the electrochemical device. However, the insulating adhesive film will cover part of the active material layer, which reduces the capacity and energy density of the electrochemical device.

### SUMMARY

This application aims to provide an electrochemical device and an electric device, which can reduce an area of a first active material layer covered by an original insulator, and effectively increase an effective area of the first active material layer in a first electrode plate, thereby increasing an energy density of the electrochemical device.

This application adopts the following technical solution to solve the technical problem thereof:

An electrochemical device includes an electrode assembly and an insulator. The electrode assembly is formed by winding a first electrode plate, a second electrode plate and a separator that are stacked, the separator is disposed between the first electrode plate and the second electrode plate, the first electrode plate includes a first current collector and a first active material layer, and a first surface of the first current collector includes a first coated region coated with the first active material layer and a first blank foil region not coated with the first active material layer in a first direction. The first surface is disposed away from a winding center of the electrode assembly, and the first direction is a direction in which a length edge extends after the first electrode plate is unwound; and the first active material layer is provided with a first side edge and a second side edge that are oppositely disposed in the first direction, as well as a third side edge and a fourth side edge that are oppositely disposed in a second direction, and the first side edge and the third side edge are connected through a first connecting edge, where the second direction is a direction in which a width edge extends after the first electrode plate is unwound. The electrochemical device further includes an insulator, the insulator includes a base portion and a first extending portion, the base portion is provided with a first end and a second end that are oppositely disposed along the first direction, the first end is disposed on the first blank foil region, the second end is disposed on the first active material layer, and the base portion covers the first side edge; and the first extending portion extends in a direction away from the first end from the second end, the first extending portion at least partially covers the first connecting edge, the insulator completely covers the first connecting edge and the first side edge, and in the first direction, a maximum distance from a side of the first extending portion away from the second end to the first side edge is greater than a maximum distance from the second end to the first side edge.

In some embodiments, in the second direction (or in a direction of pointing from the third side edge to the fourth side edge), a distance from the side of the first extending portion away from the second end to the first side edge gradually decreases (or an outer contour of the first extending portion gradually shrinks).

In some embodiments, the first connecting edge has an arc shape, and a radius R1 of the first connecting edge satisfies: R1 ≥ 1 mm.

In some embodiments, in the first direction, a distance D1 from a side of the first extending portion away from the first end to the first side edge satisfies: 1.2 mm ≤ D1 ≤ 6 mm.

In some embodiments, the insulator is provided with a second connecting edge, the second connecting edge connects the first extending portion to the base portion, and a minimum distance D2 between the second connecting edge and the first connecting edge satisfies: 0.2 mm ≤ D2 ≤ 2 mm.

In some embodiments, a minimum distance D3 between the second end and the first side edge satisfies: 0.2 mm ≤ D3 ≤ 2 mm.

In some embodiments, the first side edge and the fourth side edge are connected through a third connecting edge, the third connecting edge has an arc shape, and a radius R2 of the third connecting edge satisfies: R2 ≥ 1 mm.

In some embodiments, the insulator further includes a second extending portion and a fourth connecting edge, the second extending portion extends in a direction away from the first end from the second end, the fourth connecting edge connects the second extending portion to the base portion, the second extending portion at least partially covers the third connecting edge, the insulator completely covers the first side edge and the third connecting edge, and in the first direction, a maximum distance from a side of the second extending portion away from the second end to the first side edge is greater than a maximum distance from the second end to the first side edge.

In some embodiments, in the second direction (or in a direction of pointing from the fourth side edge to the third side edge), a distance from the side of the second extending portion away from the second end to the first side edge gradually decreases (or an outer contour of the second extending portion gradually shrinks).

In some embodiments, in the first direction, a distance D4 from a side of the second extending portion away from the first end to the first side edge satisfies: 1.2 mm ≤ D4 ≤ 6 mm; and a minimum distance D5 between the fourth connecting edge and the third connecting edge satisfies: D5 ≥ 0.2 mm.

In some embodiments, the first electrode plate is a negative electrode plate, and the second electrode plate is a positive electrode plate; and a second tail end of the second electrode plate is located between the second end of the base portion and the first end, the first electrode plate provided with the first blank foil region is wound on an outer side of the second electrode plate, and in a winding direction of the electrode assembly, the second tail end of the second electrode plate protrudes from a first tail end of the first electrode plate, where the first tail end and the second tail end are winding completed ends of the first electrode plate and the second electrode plate at the electrode assembly, respectively.

This application further provides an electric device according to another embodiment. The electric device includes the above electrochemical device, and the electrochemical device is configured to supply electric energy to the electric device.

Compared with a current electrochemical device on the market, the electrochemical device according to the embodiment of this application has the beneficial effects that through the above configuration, the insulator reduces the area of the first active material layer covered by the base portion while completely and reliably covering the first connecting edge, which effectively increases the effective area of the first active material layer in the first electrode plate, thereby increasing the energy density of the electrochemical device.

### BRIEF DESCRIPTION OF DRAWINGS

In order to more clearly illustrate technical solutions in embodiments of this application, the following will briefly introduce accompanying drawings that are desired to be used in descriptions of the embodiments. Apparently, the accompanying drawings in the following descriptions are merely some embodiments of this application, and a person of ordinary skill in the art may further obtain other accompanying drawings according to structures shown in these accompanying drawings without creative work.
FIG. 1 is a sectional view of an electrochemical device according to an embodiment of this application as observed from a viewing angle.
FIG. 2 is a schematic diagram of a first electrode plate in the electrochemical device according to an embodiment of this application as observed from a viewing angle.
FIG. 3 is a schematic diagram of a first surface of the first electrode plate in the electrochemical device according to an embodiment of this application as observed from a viewing angle.
FIG. 4 is a schematic diagram of the first electrode plate in the electrochemical device according to an embodiment of this application as observed from another viewing angle.
FIG. 5 is a schematic diagram of a second electrode plate in the electrochemical device according to an embodiment of this application as observed from a viewing angle.
FIG. 6 is a schematic diagram of the second electrode plate in the electrochemical device according to an embodiment of this application as observed from another viewing angle.
FIG. 7 is a schematic diagram of an insulator in the electrochemical device according to an embodiment of this application as observed from a viewing angle.
FIG. 8 is a close-up view of the first electrode plate of the electrochemical device according to an embodiment of this application.
FIG. 9 is a schematic diagram of an insulator in the electrochemical device according to another embodiment of this application as observed from a viewing angle.
FIG. 10 is a schematic diagram of an insulator in the electrochemical device according to yet another embodiment of this application as observed from a viewing angle.
FIG. 11 is a close-up view of the first electrode plate in the electrochemical device according to another embodiment of this application.
FIG. 12 is a schematic diagram of an electrode assembly in the electrochemical device according to an embodiment of this application as observed from a viewing angle.
FIG. 13 is a close-up view of a local part C shown in FIG. 12.

### DETAILED DESCRIPTION

For ease of understanding this application, this application is described in more detail below in conjunction with drawings and specific embodiments. It is hereby noted that when one component is expressed as being "fixed to", "disposed on" or "fixedly connected to" another component, it may be directly on the another component, or there may be one or more components therebetween. When one component is expressed as being "connected" to another component, it may be directly connected to the another component, or there may also be one or more components therebetween. The terms "vertical", "horizontal", "left", "right", "internal", "external" and similar expressions used in the description are merely for the purpose of illustration.

In the description, the "mounting" includes fixing or limiting a component or device to a specific position or place by welding, screwing, clamping, gluing, etc. The component or device may remain still in the specific position or place or may move within a limited range, and the component or device may or may not be dismounted after being fixed or limited to the specific position or place, which is not limited in the embodiments of this application. In addition, technical features involved in the different embodiments of this application described below may be mutually combined as long as they do not conflict with each other.

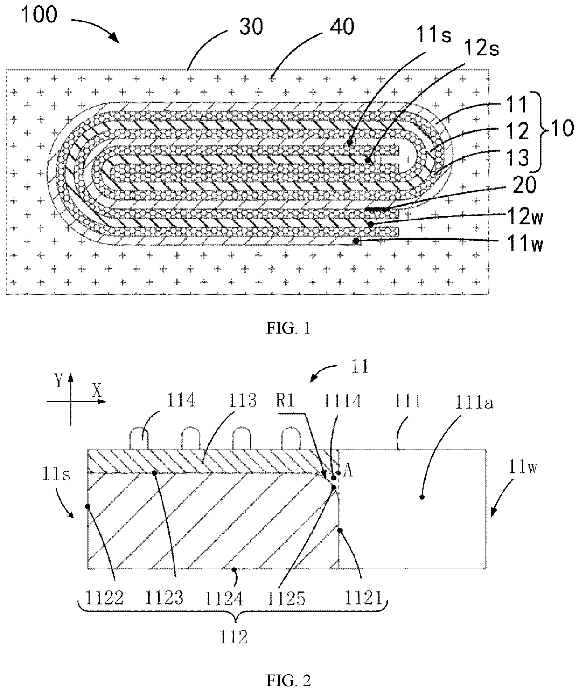

Referring to FIG. 1, an electrochemical device 100 includes an electrode assembly 10, an insulator 20, a housing 30 and an electrolyte 40. The housing 30 is provided with an accommodation cavity that is filled with the electrolyte 40, the insulator 20 is disposed in the electrode assembly 10 and accommodated in the accommodation cavity together with the electrode assembly 10, and the electrolyte 40 completely immerses the electrode assembly 10 and provides a liquid environment for a chemical reaction of the electrode assembly 10.

It is worth noting that the electrochemical device 100 may be a pouch-type battery. That is, the housing 30 is prepared from a flexible material, such as an aluminum-plastic film or a steel-plastic film. The electrochemical device 100 may also be a hard-case battery. The housing 30 is prepared from a hard material, such as an aluminum housing material, a steel housing material, a high-hardness plastic material or other metal materials.

The electrode assembly 10 includes a first electrode plate 11, a second electrode plate 12 and a separator 13. The first electrode plate 11 is provided with a first head end 11s and a first tail end 11w, and the second electrode plate 12 is provided with a second head end 12s and a second tail end 12w. The first electrode plate 11, the separator 13 and the second electrode plate 12 are sequentially stacked, and wound from the first head end 11s and the second head end 12s to form the electrode assembly 10. In this embodiment, the first electrode plate 11 is a negative electrode plate, and the second electrode plate 12 is a positive electrode plate. After the completion of winding, an outermost layer is the first electrode plate 11. In a winding direction, the second head end 12s protrudes from the first head end 11s, and the second tail end 12w protrudes from the first tail end 11w, thereby ensuring that lithium cobalt oxide deintercalated from the first electrode plate 11 can be intercalated into the second electrode plate 12, and preventing lithium plating of the electrochemical device 100, which affects the safety of the electrochemical device 100.

As for the above first electrode plate 11, reference is made to FIG. 2 to FIG. 4. A direction in which a length edge extends after the first electrode plate 11 is unwound is defined as a first direction X, and a direction in which a width edge extends after the first electrode plate 11 is unwound is defined as a second direction Y, where the first direction X and the second direction Y are perpendicular to each other. The first electrode plate 11 includes a first current collector 111, a first active material layer 112, a first insulating material layer 113 and a plurality of first tabs 114. A surface of the first current collector 111 is coated with the first active material layer 112 and the first insulating material layer 113. The first active material layer 112 chemically reacts with the second electrode plate 12 through the electrolyte 40. The first insulating material layer 113 isolates the first electrode plate 11 from being in contact with the second electrode plate 12 to reduce the risk of a short circuit. The plurality of tabs 114 are all connected to the length edge of the first electrode plate 11 and are disposed at intervals in the first direction X, and each of the first tabs 114 extends in the second direction Y

The first current collector 111 is provided with a first surface 111a and a second surface 11 1b that are oppositely disposed, where the first surface 111a is oriented away from a winding center of the electrode assembly 10, and the second surface 111b is close to the winding center of the electrode assembly 10. In the first direction X, the first surface 111a of the first current collector 111 is adjacently provided with a first coated region 1111 and a first blank foil region 1112 in sequence, the first coating region 1111 is configured to be coated with the first active material layer 112, and the first blank foil region 1112 is not treated. In the second direction Y, the first surface 111a of the first current collector 111 is adjacently provided with the first coated region 1111 and a second blank foil region 1113 in sequence, and the second blank foil region 1113 is configured to be coated with the first insulating material layer 113. In the second direction Y, the second surface 111b of the first current collector 111 is adjacently coated with the first active material layer 112 and the first insulating material layer 113 in sequence. The first insulating material layer 113 may include some existing commonly used inorganic materials or insulating organic materials, and the inorganic materials may include aluminum oxide, magnesium oxide, zirconium oxide and the like; and the first insulating material layer 113 may further include a commonly used binder, such as polyvinylidene fluoride-hexafluoropropylene, polyvinylidene fluoride, polymethyl methacrylate, polyphenylene ether, polypropylene carbonate, polyethylene oxide and a derivative thereof.

The first active material layer 112 with which the first coating region 1111 is coated is provided with a first side edge 1121, a second side edge 1122, a third side edge 1123, a fourth side edge 1124 and a first connecting edge 1125. The first side edge 1121 and the second side edge 1122 are oppositely disposed in the first direction X, the third side edge 1123 and the fourth side edge 1124 are oppositely disposed in the second direction Y, and the two ends of the first connecting edge 1125 are tangent to the first side edge 1121 and the third side edge 1123 respectively and smoothly connected. An extension line of the first side edge 1121 and an extension line of the third side edge 1123 intersect at a point A. The first connecting edge 1125 has a circular arc shape, and a protruding portion of a circular arc approaches to the point A. A radius R1 of the first connecting edge 1125 satisfies: R1 ≥ 1 mm. The extension line of the first side edge 1121, the extension line of the third side edge 1123 and the first connecting edge 1125 close in to form a first vacant region 1114 together, and the first vacant region 1114 is not coated with any coating.

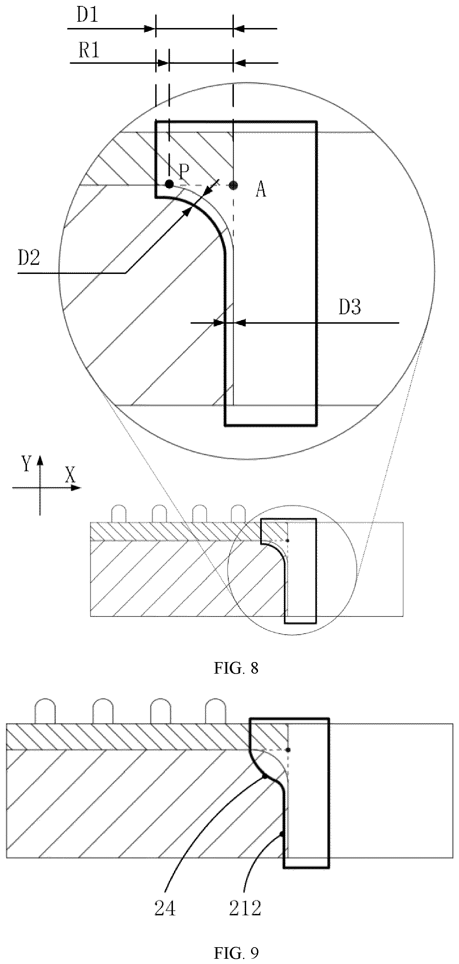

In the embodiment, referring to FIG. 8, a method for measuring the radius R1 of the first connecting edge 1125 is as follows. In the first direction X, there is an interface separation point P (i.e., a tangent point of the third side edge 1123 and the first connecting edge 1125) of the first insulating material layer 113 and the first active material layer 112, and a distance from the separation point P to the first side edge is the radius R1 of the first connecting edge 1125.

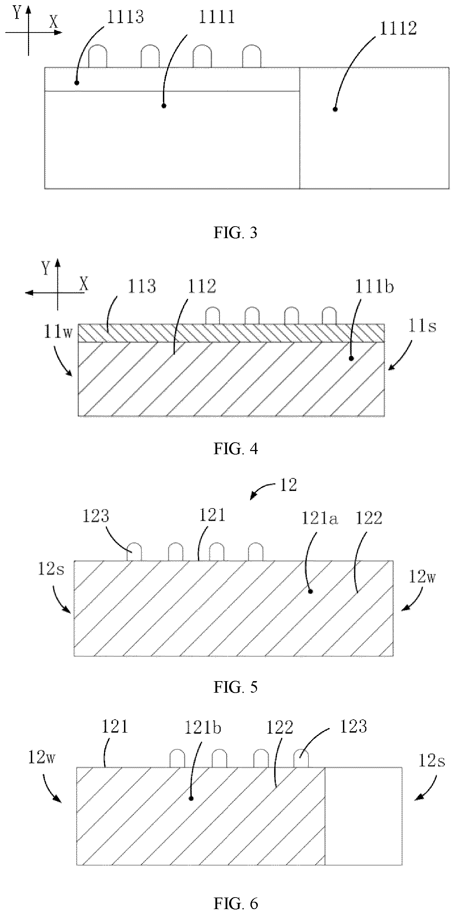

As for the above second electrode plate 12, reference is made to FIG. 5 and FIG. 6. The second electrode plate 12 includes a second current collector 121, a second active material layer 122 and a plurality of second tabs 123. The plurality of second tabs 123 are all connected to a length edge of the second current collector 121, and in a direction in which the length edge extends after the second electrode plate 12 is unwound, the plurality of second tabs 123 are disposed at intervals and extend in a direction perpendicular to the length edge. The second current collector 121 is provided with a third surface 121a and a fourth surface 121b that are oppositely disposed, where the third surface 121a is oriented away from the winding center of the electrode assembly 10, and the fourth surface 121b is close to the winding center of the electrode assembly 10. The third surface 121a is coated with the second active material layer 122, the fourth surface 121b is coated with the second active material layer 122, and a position of the fourth surface 121b close to the second head end 12s is not coated with the second active material layer 122. The second active material layer 122 is configured to chemically react with the first active material layer 112.

When the first electrode plate 11, the second electrode plate 12 and the separator 13 are stacked and wound to form the electrode assembly 10, the plurality of the first tabs 114 are sequentially stacked to form one electrode of the electrode assembly 10, and the plurality of second tabs 123 are sequentially stacked to form the other electrode of the electrode assembly 10.

In some embodiments, the first electrode plate 11 is a negative electrode plate, and the second electrode plate 12 is a positive electrode plate.

In some embodiments, the first current collector 111 is an aluminum foil, and the second current collector 121 is a copper foil.

In some embodiments, the first insulating material layer 113 may be an inorganic particle layer, such as a ceramic coating.

In some embodiments, the first tabs 114 and the first current collector 111 are of an integrally formed structure, that is, the first tabs 114 are formed by cutting the first current collector 111; and the second tabs 123 and the second current collector 121 are of an integrally formed structure, that is, the second tabs 123 are formed by cutting the second current collector 121. In some other embodiments, the first tabs 114 are welded or bonded to the first current collector 111; and the second tabs 123 are welded or bonded to the second current collector 121.

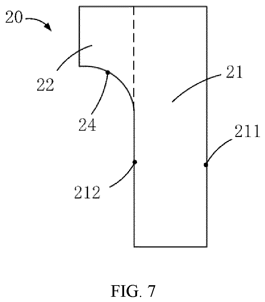

As for the above insulator 20, reference is made to FIG. 7. The insulator 20 includes a base portion 21, a first extending portion 22 and a second connecting edge 24. In the first direction X, the base portion 21 is provided with a first end 211 and a second end 212. The first end 211 is disposed in the first blank foil region 1112, the second end 212 is disposed on the first active material layer 112, and the base portion 21 covers the first side edge 1121 of the first active material layer 112. The first extending portion 22 extends in a direction away from the first end 211 from the second end 212, and the first extending portion 22 covers part of the first side edge 1121, part of the third side edge 1123 and all of the first connecting edge 1125 of the first active material layer 112. In an embodiment, the base portion 21 completely covers the first side edge 1121 of the first active material layer 112, and the first extending portion 22 at least partially covers the first connecting edge 1125. The separator 13 generally has a thickness of 4 µm to 5 µm, and thus is poor in mechanical property and compactness, while the insulator 20 has a thickness of 14 µm to 16 µm, and thus is good in mechanical property and compactness, and when the first extending portion 22 completely covers the first vacant region 1114, an aluminum-positive electrode short circuit reaction of the first current collector 111 can be prevented when the separator 13 between the first electrode plate 11 and the second electrode plate 12 is broken, thereby improving safety performance of the electrochemical device 100. The second connecting edge 24 is configured to smoothly connect a side of the first extending portion 22 away from the first end 211 to the second end 212 to prevent a sudden-change connection point at a junction of the first extending portion 22 and the base portion 21, and the insulator 20 is prone to a phenomenon of stress concentration at the sudden-change connection point, and is torn inwards from the sudden-change connection point to break the insulator 20, which affects the safety performance of the electrochemical device 100. In the second direction Y (or in a direction of pointing from the third side edge 1123 of the first active material layer 112 to the fourth side edge 1124), a distance from a side of the first extending portion 22 away from the second end 212 to the first side edge 1121 gradually decreases (or an outer contour of the first extending portion 22 gradually shrinks).

Referring to FIG. 8, in the first direction X, a distance D1 from the side of the first extending portion 22 of the insulator 20 away from the first end 211 to the first side edge 1121 of the first active material layer 112 satisfies: 1.2 mm ≤ D1 ≤ 6 mm. In the mass production process of the first electrode plate 11, when the first coated region 1111 of the first current collector 111 is coated with the first active material layer 112, the radius R1 of the first connecting edge 1125 of the first active material layer 112 can only be controlled at a minimum of 1 mm due to the influence of an existing coating tool and coating process technology. Therefore, in the embodiment, in order to ensure that the first extending portion 22 of the insulator 20 can completely and reliably cover the first vacant region 1114, the distance D1 from the side of the first extending portion 22 of the insulator 20 away from the first end 211 to the first side edge 1121 of the first active material layer 112 is at least greater than or equal to 1.2 mm.

In the embodiment, a method for measuring the distance D1 from the side of the first extending portion 22 of the insulator 20 away from the first end 211 to the first side edge 1121 of the first active material layer 112 is as follows. An extension line of the side (one point) of the first extending portion 22 of the insulator 20 away from the first end 211 is made in the second direction Y, an extension line of the first side edge 1121 is made in the second direction Y, and a distance between the two extension lines in the first direction X is the distance D1. The similar method may also be used for measuring other distances mentioned herein, such as D2.

A minimum distance D2 between the second connecting edge 24 of the insulator 20 and the first connecting edge 1125 of the first active material layer 112 satisfies: 0.2 mm ≤ D2 ≤ 2 mm. In the process of disposing the insulator 20 on the first electrode plate 11, in order to ensure that the insulator 20 can completely and reliably cover the first vacant region 1114, in combination with a tolerance of an existing process technology, the insulator 20 can reliably and snugly fit onto the first active material layer 112 only when the minimum distance D2 between the second connecting edge 24 of the insulator 20 and the first connecting edge 1125 of the first active material layer 112 is at least greater than or equal to 0.2 mm.

In the first direction X, a minimum distance D3 between the second end 212 of the insulator 20 and the first side edge 1121 of the first active material layer 112 satisfies: 0.2 mm ≤ D3 ≤ 2 mm. In the process of disposing the insulator 20 on the first electrode plate 11, in order to ensure that the insulator 20 can completely and reliably cover the first side edge 1121 of the first active material layer 112, in combination with a tolerance of an existing process technology, the insulator 20 can reliably and snugly fit onto the first active material layer 112 only when the minimum distance D2 between the second end 212 of the insulator 20 and the first side edge 1121 of the first active material layer 112 is at least greater than or equal to 0.2 mm. In addition, the minimum distance D2 between the second connecting edge 24 of the insulator 20 and the first connecting edge 1125 of the first active material layer 112 and the minimum distance D3 between the second end 212 of the insulator 20 and the first side edge 1121 of the first active material layer 112 also need to be controlled within a reasonable range. When the minimum distance D2 and the minimum distance D3 are unduly large, an area of the first active material layer 112 covered by the insulator 20 is unduly large, thus affecting an effective reaction area between the first electrode plate 11 and the second electrode plate 12, and reducing the capacity and energy density of the electrochemical device 100.

In the embodiment, the second connecting edge 24 of the insulator 20 has a circular arc shape, and an arc protruding direction of the second connecting edge 24 is identical to an arc protruding direction of the first connecting edge 1125, that is, a center of a circle where the first connecting edge 1125 is located coincides with a circle of a center where the second connecting edge 24 is located, and the second connecting edge 24 and the first connecting edge 1125 are of a ring structure. In the ring structure, a distance between the first connecting edge 1125 and the second connecting edge 24 remains the same, such that the insulator 20 covers a minimum area of the first active material layer 112 while completely and reliably covering the first vacant region 1114, which is conducive to increasing the capacity of the electrochemical device 100, thereby increasing the energy density of the electrochemical device 100.

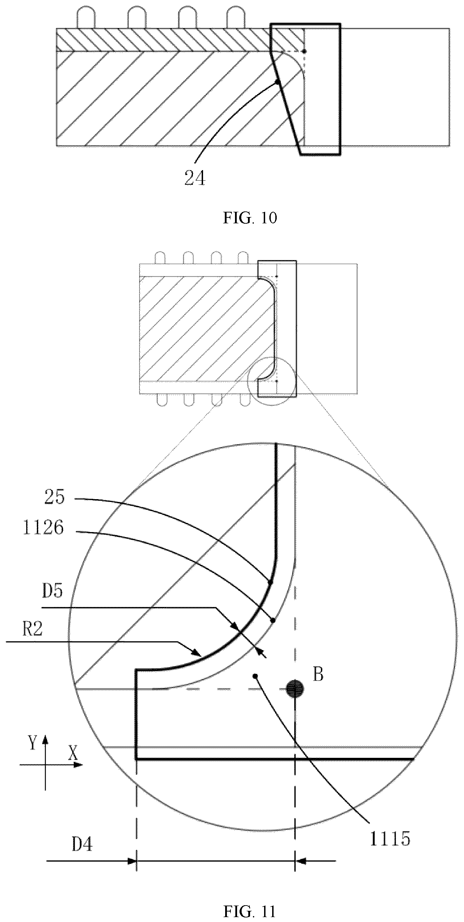

In some other embodiments, referring to FIG. 9 and FIG. 10, the second connecting edge 24 of the insulator 20 may have other shapes, provided that the first extending portion 22 of the insulator 20 can completely and reliably cover the first vacant region 1114, e.g., a circular arc shape, an arc protruding portion of which is disposed opposite to an arc protruding portion of the first connecting edge 1125, or a straight line shape, a straight line of which directly connects the first extending portion 22 to the second end 212.

In some embodiments, the first extending portion 22 of the insulator 20 covers part of the first connecting edge 1125, and the base portion 21 of the insulator 20 covers the rest of the first connecting edge 1125 and all of the first side edge 1121.

In some embodiments, referring to FIG. 11, the first active material layer 112 coating the first coated region 1111 further includes a third connecting edge 1126, and the two ends of the third connecting edge 1126 are tangent to the first side edge 1121 and the fourth side edge 1124 respectively and smoothly connected. An extension line of the first side edge 1121 and an extension line of the fourth side edge 1124 intersect at a point B. The third connecting edge 1126 has a circular arc shape, and a protruding portion of a circular arc approaches to the point B. A radius R2 of the third connecting edge 1126 satisfies: R2 ≥ 1 mm. The extension line of the first side edge 1121, the extension line of the fourth side edge 1124 and the third connecting edge 1126 close in to form a second vacant region 1115 together, and the second vacant region 1115 is not coated with any coating.

The insulator 20 further includes a second extending portion 23 and a fourth connecting edge 25. The second extending portion 23 extends away from the first end 211 of the base portion 21 from the second end 212 of the base portion 21. The second extending portion 23 covers part of the first side edge 1121, part of the fourth side edge 1124 and all of the third connecting edge 1126 of the first active material layer 112. That is, the second extending portion 23 completely covers the second vacant region 1115 to prevent a positive electrode reaction phenomenon of the first current collector 111 when the separator 13 between the first electrode plate 11 and the second electrode plate 12 is broken, thereby improving safety performance of the electrochemical device 100. The second extending portion 23 may further partially cover the third connecting edge 1126, and the base portion 21 completely covers the first side edge 1121 and part of the third connecting edge 1126, that is, the base portion 21 and the second extending portion 23 covers the second vacant region 1115 together. The fourth connecting edge 25 is configured to smoothly connect a side of the second extending portion 23 away from the first end 211 to the second end 212 to prevent a sudden-change connection point at a junction of the second extending portion 23 and the base portion 21, and the insulator 20 is prone to a phenomenon of stress concentration at the sudden-change connection point, and is torn inwards from the sudden-change connection point to break the insulator 20, which affects the safety performance of the electrochemical device 100. In the second direction Y (or in a direction of pointing from the fourth side edge 1124 of the first active material layer 112 to the third side edge 1123), a distance from a side of the second extending portion 23 away from the second end 212 to the first side edge 1121 gradually decreases (or an outer contour of the second extending portion 23 gradually shrinks). In the first direction X, a maximum distance from the side of the second extending portion 23 away from the second end 212 to the first side edge 1121 is greater than a maximum distance from the second end 212 to the first side edge 1121.

In the first direction, a distance D4 from a side of the second extending portion 23 of the insulator 20 away from the first end 211 to the first side edge 1121 of the first active material layer 112 satisfies: 1.2 mm ≤ D4 ≤ 6 mm.

A minimum distance D5 between the fourth connecting edge 25 of the insulator 20 and the third connecting edge 1126 of the first active material layer 112 satisfies: 0.2 mm ≤ D5 ≤ 2 mm.

It is worth noting that in some embodiments, the extend to which the first extending portion 22 and the base portion 21 cover the first side edge 1121 and the first connecting edge 1125 may be appropriately adjusted according to actual needs. For example, the first extending portion 22 partially covers the first connecting edge 1125, and the base portion 21 covers the rest of the first connecting edge 1125 and the first side edge 1121; or, the base portion 21 covers part of the first side edge 1121, and the first extending portion 22 covers the rest of the first side edge 1121 and the first connecting edge 1125; or, the first extending portion 22 completely covers the first connecting edge 1125, and the base portion 21 completely covers the first side edge 1121, or the like, provided that the base portion 21 and the first extending portion 22 cooperate to completely cover the first vacant region 1114. Similarly, the above covering rule is also applicable to the second extending portion 23 and the base portion 21, provided that the base portion 21 and the second extending portion 23 cooperate to completely cover the second vacant region 1115.

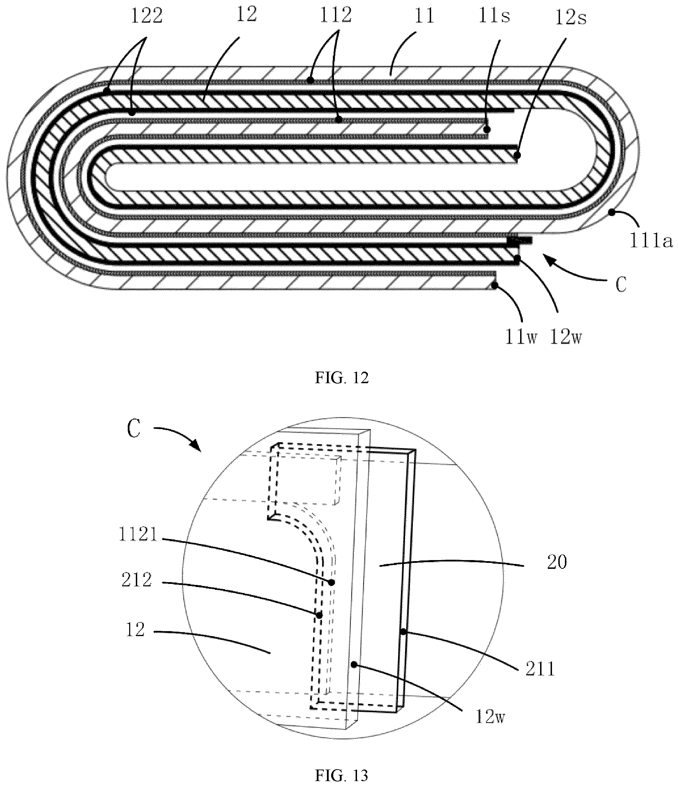

In order to facilitate readers to better understand the technical solution of this application, the first electrode plate 11, the second electrode plate 12 and the separator 13 (not shown in the drawing) in the electrode assembly 10 are simplified. Referring to FIG. 12 and FIG. 13, in this embodiment, the first active material layer 112 is lithium cobalt oxide, and the second active material layer 122 is graphite. After the first electrode plate 11, the second electrode plate 12 and the separator 13 are sequentially stacked and wound to form the electrode assembly 10, the second tail end 12w of the second electrode plate 12 is ended between the second end 212 and the first end 21 of the base portion 21 in the insulator 20, and preferably, the second tail end 12w of the second electrode plate 12 is ended between the second end 212 of the base portion 21 and the first side edge 1121 of the first active material layer 112, which can reduce a graphite coating not participating in a chemical reaction in the second electrode plate 12, reduce a manufacturing cost, and increase a reaction rate between the lithium cobalt oxide of the first electrode plate 11 and the graphite of the second electrode plate 12. The first electrode plate 11 provided with the first blank foil region 1112 continues being wound on the outer side of the second electrode plate 12, and in a winding direction of the electrode assembly 10, the second tail end 12w of the second electrode plate 12 protrudes from the first tail end 11w of the first electrode plate 11, which ensures that the second electrode plate 12 has a sufficient graphite coating for the lithium cobalt oxide deintercalated from the first electrode plate 11 to be intercalated, reduces the probability of a lithium plating phenomenon of the electrode assembly 10, and improves the safety of the electrochemical device 100.

The electrochemical device 100 according to the embodiment of this application has the following beneficial effects. The electrochemical device 100 includes the electrode assembly 10 and the insulator 20. The electrode assembly 10 is formed by winding the first electrode plate 11, the second electrode plate 12 and the separator 13 that are stacked. The first electrode plate 11 includes the first current collector 111 and the first active material layer 112. The first surface 111a of the first current collector 111 is provided with the first coated region 1111 and the first blank foil region 1112. The first active material layer 112 is disposed in the first coated region 1111. The first active material layer 112 is provided with the first side edge 1121 and the second side edge 1122 that are oppositely disposed in the first direction X, as well as the third side edge 1123 and the fourth side edge 1124 that are oppositely disposed in the second direction Y The first side edge 1121 and the third side edge 1123 are connected through the first connecting edge 1125. The insulator 20 includes the base portion 21 and the first extending portion 22. In the first direction X, the base portion 21 is provided with the first end 211 and the second end 212. The base portion 21 of the insulator 20 covers the first side edge 1121 of the first active material layer 112, and the first extending portion 22 of the insulator 20 covers the first connecting edge 1125. In the direction of pointing from the third side edge 1123 to the fourth side edge 1124, the outer contour of the first extending portion 22 gradually shrinks, where the first direction X is the direction in which the length edge extends after the first electrode plate 11 is unwound, and the second direction Y is the direction in which the width edge extends after the first electrode plate 11 is unwound. Through the above configuration, the insulator 20 reduces the area of the first active material layer 112 covered by the base portion 21 while completely and reliably covering the first connecting edge 1125, and effectively increases the effective area of the first active material layer 112 in the first electrode plate 11, thereby increasing the energy density of the electrochemical device 100.

Based on the same inventive concept, the embodiment of this application further provides an electric device, including the electrochemical device 100. Reference is made to the above embodiment for the specific structure and function of the electrochemical device 100, details of which are omitted here. The electric device may be a mobile phone, a tablet computer, a computer, an unmanned aerial vehicle, or the like that needs to be driven by electricity.

Finally, it is hereby noted that the foregoing embodiments are merely intended to illustrate technical solutions of this application rather than to limit this application; under the thought of this application, technical features in the foregoing embodiments or different embodiments may also be combined, steps may be implemented in any orders, and there are many other changes in different aspects of this application as described above, which are not provided in detail for the sake of brevity; although this application is illustrated in detail with reference to the foregoing embodiments, a person of ordinary skill in the art understands that he may still make modifications to the technical solutions recited in the foregoing embodiments or make equivalent replacements to some of the technical features; however, these modifications or replacements do not make the essence of the corresponding technical solution depart from the scope of the technical solutions of the embodiments.

## Claims

1. An electrochemical device, comprising an electrode assembly; the electrode assembly being formed by winding a first electrode plate, a second electrode plate and a separator; the first electrode plate, the second electrode plate and the separator are stacked; the separator being provided between the first electrode plate and the second electrode plate, **characterized in that**,
the first electrode plate comprises a first current collector and a first active material layer;
a first surface of the first current collector comprises a first coated region coated with the first active material layer and a first blank foil region not coated with the first active material layer, the first coated region and the first blank foil region are provided along a first direction; wherein the first surface is provided facing away from a winding center of the electrode assembly; and the first direction is a direction in which a length edge extends after the first electrode plate is unwound;
the first active material layer is provided with a first side edge and a second side edge that are oppositely disposed in the first direction, as well as a third side edge and a fourth side edge that are oppositely disposed in a second direction, and the first side edge and the third side edge are connected through a first connecting edge, wherein the second direction is a direction in which a width edge extends after the first electrode plate is unwound;
the electrochemical device further comprises an insulator, the insulator comprises a base portion and a first extending portion, the base portion is provided with a first end and a second end that are oppositely disposed along the first direction, the first end is provided on the first blank foil region, the second end is provided on the first active material layer, and the base portion covers the first side edge; and
the first extending portion extends in a direction in which the second end facing away from the first end, the first extending portion at least partially covers the first connecting edge, the insulator covers the first side edge and the first connecting edge, and along the first direction, a maximum distance from a side of the first extending portion away from the second end to the first side edge is greater than a maximum distance from the second end to the first side edge.

2. The electrochemical device according to claim 1, **characterized in that**,
along the second direction, a distance from the side of the first extending portion away from the second end to the first side edge gradually decreases.

3. The electrochemical device according to claim 1, **characterized in that**,
the first connecting edge is arc-shaped, and a radius R1 of the first connecting edge satisfies: R1 ≥ 1 mm.

4. The electrochemical device according to claim 1 or 2, **characterized in that**,
along the first direction, a distance D1 from a side of the first extending portion away from the first end to the first side edge satisfies: 1.2 mm ≤ D1 ≤ 6 mm.

5. The electrochemical device according to claim 1, **characterized in that**,
the insulator is provided with a second connecting edge;
the second connecting edge connects the first extending portion to the base portion; and
a minimum distance D2 between the second connecting edge and the first connecting edge satisfies: 0.2 mm ≤ D2 ≤ 2 mm.

6. The electrochemical device according to claim 1, **characterized in that**,
a minimum distance D3 between the second end and the first side edge satisfies: 0.2 mm ≤ D3 ≤ 2 mm.

7. The electrochemical device according to claim 1, **characterized in that**,
the first side edge and the fourth side edge are connected through a third connecting edge;
the third connecting edge is arc-shaped; and
a radius R2 of the third connecting edge satisfies: R2 ≥ 1 mm.

8. The electrochemical device according to claim 7, **characterized in that**,
the insulator further comprises a second extending portion and a fourth connecting edge;
the second extending portion extends in the direction in which the second end facing away from the first end;
the fourth connecting edge connects the second extending portion to the base portion;
the second extending portion at least partially covers the third connecting edge;
the insulator completely covers the first side edge and the third connecting edge; and
along the first direction, a maximum distance from a side of the second extending portion away from the second end to the first side edge is greater than the maximum distance from the second end to the first side edge.

9. The electrochemical device according to claim 8, **characterized in that**,
along the second direction, a distance from the side of the second extending portion away from the second end to the first side edge gradually decreases.

10. The electrochemical device according to claim 8, **characterized in that**,
along the first direction, a distance D4 from a side of the second extending portion away from the first end to the first side edge satisfies: 1.2 mm ≤ D4 ≤ 6 mm; and
a minimum distance D5 between the fourth connecting edge and the third connecting edge satisfies: 0.2 mm ≤ D5 ≤ 2 mm.

11. The electrochemical device according to claim 1, **characterized in that**,
the first electrode plate is a negative electrode plate, the second electrode plate is a positive electrode plate;
a second tail end of the second electrode plate is provided between the second end of the base portion and the first end;
the first electrode plate provided with the first blank foil region is wound on an outer side of the second electrode plate; and
in a winding direction of the electrode assembly, the second tail end of the second electrode plate protrudes from a first tail end of the first electrode plate, wherein the first tail end and the second tail end are winding completed ends of the first electrode plate and the second electrode plate at the electrode assembly, respectively.

12. An electric device, **characterized in that**, the electric device comprises the electrochemical device according to any one of claims 1 to 11, and the electrochemical device is configured to supply electric energy to the electric device.
